# FASCICULE DE BREVET EUROPEEN

(11) **EP 1 342 208 B1**
(45) Date de publication et mention de la délivrance du brevet: **16.12.2009**
(21) Numéro de dépôt: 02793170.8
(22) Date de dépôt: 18.10.2002
(51) Int. Cl.: G06K 17/00

(54) **DISPOSITIF DE TRANSPORT DANS UN SYSTEME D'EMBOSSAGE DE CARTE**
TRANSPORTVORRICHTUNG IN EINEM KARTENPRÄGESYSTEM
TRANSPORT DEVICE IN A CARD EMBOSSING SYSTEM

(30) Priorité: 19.10.2001 FR 0113555
(43) Date de publication de la demande: 10.09.2003
(73) Titulaire: Datacard Corporation, Minnetonka, MN 55343-9014 (US)
(72) Inventeur: ORMEROD, Simon, F-45430 Mardie (FR); DUGACHARD, Lucien, F-94230 Cachan (FR); BOUSQUET, Christophe, Résidence Vauban,, 06600 Antibes Juan Les Pins (FR); GARDES, Fabien, F-45760 Boigny sur Bionne (FR)
(74) Mandataire: Cabinet Plasseraud
(86) Numéro de dépôt international: PCT/FR2002/003577
(87) Numéro de publication internationale: WO 2003/034330

(56) Documents cités:
- US-A- 5 332 889
- US-A- 5 716 313

## Description

La présente invention concerne un dispositif de traitement ou de personnalisation de cartes ou objets portables aplatis, par exemple du type carte à mémoire, carte à puce, carte à bande magnétique, ou badge.

Du fait de l'usage de plus en plus répandu de cartes telles que, par exemple, cartes de crédit, cartes de téléphone ou porte-monnaie électronique, de nombreux systèmes sont nécessaires pour traiter les informations contenues dans ces cartes ou ces cartes elle-mêmes, que ce soit lors de l'utilisation comme lors de la fabrication ou de la personnalisation de ces cartes avant remise à l'utilisateur.

Pour être traitées, que ce soit physiquement comme du point de vue des informations contenues dans ces cartes, une manipulation automatisée est très souvent utilisée, qui s'effectue parfois sur un très grand nombre de cartes avec éventuellement un traitement différent pour chacune d'entre elles. Différents dispositifs de transport ou de transfert de cartes sont alors utilisés pour déplacer les cartes à traiter d'un poste de traitement à un autre.

Dans la présente description, il sera fait référence plus particulièrement à un système dont l'objectif est de personnaliser par embossage ou marquage en relief, en fonction de l'application et de l'utilisateur à qui elles sont destinées, des cartes telles que badges ou cartes plastiques à circuit intégré, ou non, mais il doit être compris que le dispositif décrit peut s'appliquer à tout système où sont manipulées mécaniquement des cartes de ce type ou d'un type similaire.

Dans un système de personnalisation de cartes, un certain nombre d'opérations peut être réalisé, qui comprennent des opérations d'embossage consistant à effectuer un marquage en relief de la carte, par exemple par déformation plastique de la carte ou par dépôt contrôlé de matière sur sa surface. D'autres opérations peuvent être par exemple une impression d'une ou plusieurs surfaces de la cartes, ou une personnalisation électronique de la mémoire par l'intermédiaire de contacts électriques, de pistes magnétiques ou de dispositifs dits « sans contact » tels qu'antenne radio ou à induction, ou un contrôle des cartes en fin de personnalisation.

Pour l'approvisionnement en cartes d'une station de traitement ou entre deux stations, les cartes peuvent être acheminées par un convoyeur jusqu'à la station, puis positionnées et maintenues directement au sein de la station, ainsi qu'il est décrit dans le brevet FR 99 08782. Pour accélérer les transferts et améliorer la précision des opérations, certaines solutions consistent à utiliser un chariot qui va saisir une carte sur un convoyeur et l'amener jusqu'à la station de traitement.

Le brevet US 5614707 décrit un chariot vient prendre une carte entre deux bras puis est déplacé sur un rail pour déposer une carte dans une station de programmation, ce qui représente de nombreuses reprises de la carte, sources d'imprécisions ou d'incidents.

Le brevet US 4 995 501 décrit un chariot qui vient prendre une carte dans une ou deux pinces à ressort munies de picots appliqués sur la carte. Le chariot est alors déplacé sur un rail par un moteur de type pas à pas à travers une ou plusieurs station de personnalisation, qui peuvent traiter la carte sans qu'elle soit relâchée par les pinces,

Du fait du trajet individuel du chariot, la cadence de traitement est toutefois limitée au traitement d'une carte à la fois. De plus, dans le cas où la surface de la carte présente une certaine fragilité, par exemple juste après avoir été imprimée, ou si les ressorts sont trop serrés, il arrive également que les picots qui pincent la carte y laissent des marques inesthétiques.

Le brevet FR 2 766 945 décrit un barillet de personnalisation électronique à plusieurs emplacements de traitement, qui vient prendre les cartes sur un convoyeur et les traite pendant sa rotation. Le fait de disposer de plusieurs emplacements de traitement permet alors de fournir les cartes traitées à une cadence plus importante que ne le permettrait le temps de traitement d'un seul emplacement.

Ce dispositif oblige toutefois à disposer d'un dispositif de traitement pour chaque emplacement, et ne permet pas d'appliquer plusieurs traitements différents ou complémentaires lors du passage dans le barillet. Ces dispositifs de traitement doivent de plus être indépendants du châssis, puisque montés sur un support mobile, ce qui limite les types de traitements possibles ou complique leur mise en oeuvre.

Le brevet US 5,716,313 décrit un dispositif de pliage d'une planche de carton destinée à former un paquet de cigarettes. Ce dispositif fait intervenir une pluralité de disques ou roues montés parallèlement entre eux, centrés sur un axe commun et dont les périphéries radiales sont munies de moyens de succion qui permettent de prendre une planche de carton. Lorsqu'une planche est transportée par les disques, ceux-ci pivotent simultanément autour de leur axe de sorte que l'extrémité de la planche de carton transportée entre en contact avec une rampe en forme d'hélice qui retourne l'extrémité de la planche de carton et la plie. Toutefois, bien que ce dispositif présente un système de transport d'un objet monté sur une structure pivotante, il ne permet pas la réalisation d'un traitement des objets transportés au cours d'une rotation de la pluralité de disques ou roues.

La présente invention a donc pour objet de pallier au moins un des inconvénients de l'art antérieur.

Ce but est atteint par le dispositif de traitement de cartes de la revendication 1

Selon une particularité, le dispositif comporte au moins un dispositif de transfert, fixe par rapport à au moins une station de traitement dite correspondante, ce dispositif de transfert comportant des moyens de déplacement assurant la mise en place et le déplacement, pour un traitement dans cette même station de traitement, d'au moins un dispositif de transport portant une carte, de façon à ce que cette même carte soit traitée sans être relâchée par le dispositif de transport.

Selon une particularité, au moins un dispositif de transfert est porté en un emplacement de transfert par un support de transferts fixe par rapport à la station de traitement correspondante, la position de ce dispositif de transfert par rapport à cette station de traitement correspondante étant déterminée par un dispositif de positionnement de transfert comportant au moins une première partie de référence, solidaire du support de transferts, séparable de façon réversible d'au moins une deuxième partie de référence, solidaire du dispositif de transfert, ces deux parties comportant des moyens de positionnement coopérant ensemble pour former une butée assurant une position identique de ce dispositif de transfert par rapport à la station de traitement correspondante après une séparation puis un remontage de ces deux parties de référence, ou après un remplacement de ce dispositif de transfert par un autre.

Selon une particularité, au moins un dispositif de positionnement de transfert comporte des premiers moyens de réglage permettant une modification ou un ajustement de la position de la première partie de référence de ce même dispositif de positionnement de transfert par rapport à la station de traitement correspondante.

Selon une particularité, au moins un dispositif de positionnement de transfert comporte des deuxièmes moyens de réglage permettant un ajustement de la position de son dispositif de transfert par rapport à la deuxième partie de référence de ce même dispositif de positionnement de transfert.

Selon une particularité, au moins une station de traitement est portée par une structure dite support de stations, la position de cette station de traitement par rapport au support de stations étant déterminée par un dispositif de positionnement de station comportant au moins une première partie de référence, solidaire du support de stations, séparable de façon réversible d'au moins une deuxième partie de référence, solidaire de cette station de traitement, ces deux parties comportant des moyens de positionnement coopérant ensemble pour former une butée assurant une position identique de cette station de traitement par rapport au support de stations après une séparation puis un remontage de ces deux parties de référence, ou après un remplacement de cette station de traitement par une autre.

Selon une particularité, au moins un dispositif de positionnement de station comporte des premiers moyens de réglage permettant une modification ou un ajustement de la position de la première partie de référence de ce même dispositif de positionnement de station par rapport à son support de stations.

Selon une particularité, au moins un dispositif de positionnement de station comporte des deuxièmes moyens de réglage permettant un ajustement de la position de sa station de traitement par rapport à la deuxième partie de référence de ce même dispositif de positionnement de station.

Selon une particularité, les moyens de transport d'au moins un dispositif de transport comprennent au moins une pince comprenant un mors supérieur et un mors inférieur maintenus normalement fermés sur la carte par au moins un ressort.

Selon une particularité, la pince maintient la carte par l'intermédiaire d'éléments, dits tampons, d'une matière élastique se déformant sous la force de fermeture et limitant ainsi la pression de contact appliquée sur au moins une des surfaces de la carte pour éviter de marquer celle-ci.

Selon une particularité, la pince présente des moyens de manoeuvre comprenant au moins une tige d'ouverture effectuant l'ouverture des mors de la pince sous l'action d'un actionneur extérieur à la pince.

Selon une particularité, au moins un dispositif de transport est entraîné par au moins un dispositif de transfert suivant un déplacement linéaire parallèle à l'axe du barillet, et est guidé par des moyens de guidage solidaires du barillet.

Selon une particularité, au moins un dispositif de transfert comporte des moyens de motorisation permettant un déplacement continu, c'est à dire pouvant s'arrêter en n'importe quelle position intermédiaire sans être limité par un pas minimum de déplacement.

Selon une particularité, au moins un dispositif de transfert agit sur au moins un dispositif de transport par un doigt d'indexation entraîné par une courroie elle-même entraînée par un moteur d'un type incorporant un repérage de position et un asservissement du déplacement à ce repérage.

Selon une particularité, la station d'approvisionnement reçoit les cartes par un convoyeur suivant une direction parallèle à l'axe de rotation du barillet.

Selon une particularité, la structure de transport ramène chaque dispositif de transport à au moins une station d'approvisionnement après être passé par au moins une station de traitement, de façon à ce que la carte traitée soit déposée sur le même convoyeur qui l'a précédemment amenée à ladite station d'approvisionnement.

Selon une particularité, au moins une station de traitement comprend une station d'embossage de cartes par déformation plastique ou marquage en relief.

Selon une particularité, le dispositif comprend plusieurs stations d'embossage ou de marquage en relief, chaque station effectuant l'embossage d'une zone différente sur la même carte.

Selon une particularité, au moins une station d'embossage comprend au moins une roue d'embossage portant deux jeux de matrices mâle et femelle disposés en anneaux autour de l'axe de cette roue et réalisant l'embossage en se rapprochant selon une dilection parallèle à cet axe, le passage d'un caractère à embosser à un autre sur la carte à embosser se faisant par déplacement du dispositif de transport portant cette même carte.

Selon une particularité, au moins une station d'embossage comporte au moins une roue d'embossage entraînée en prise directe par un moteur d'un type incorporant un repérage de position et un asservissement du déplacement à ce repérage.

Selon une particularité, au moins une station d'embossage comporte au moins une roue d'embossage dont les caractères sont frappés par un électro-aimant ou un solénoïde par l'intermédiaire d'au moins un renvoi d'angle.

Selon une particularité, au moins un renvoi d'angle comporte au moins une de ses pièces mobiles qui, après la frappe d'un caractère, est ramenée dans sa position initiale par au moins un ressort de rappel.

Selon une particularité, au moins une station de traitement comprend une station de contrôle vérifiant la conformité des traitements subis ou à subir par une carte, par rapport à des informations prédéterminées ou personnalisées.

Selon une particularité, au moins une station de traitement comprend une station de personnalisation des informations de type électronique, magnétique, optique, ou d'une combinaison de ces types, contenues dans une carte.

Selon une particularité, au moins une station de traitement comprend une station d'impression de cartes.

L'invention, avec ses caractéristiques et avantages, ressortira plus clairement à la lecture de la description faite en référence aux dessins annexés dans lesquels :
- la figure 1 représente une vue partielle en perspective du dispositif selon l'invention (les pinces étant représentées schématiquement, et seule la roue des stations d'embossage étant représentée) ;

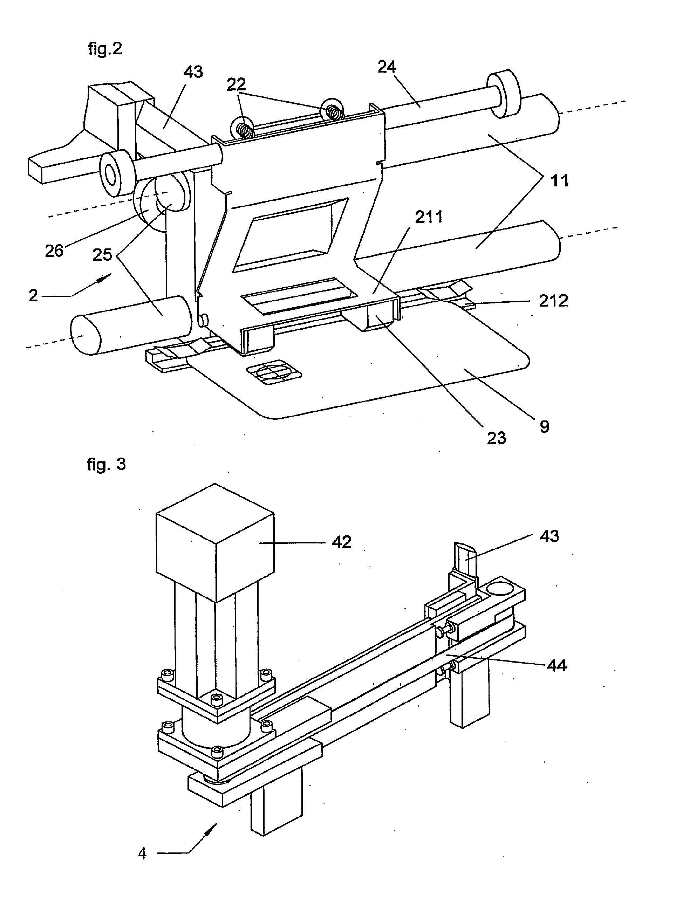

- la figure 2 représente une vue partielle en perspective d'un dispositif de transport intégré à un dispositif selon l'invention ;
- la figure 3 représente une vue en perspective d'un dispositif de transfert intégré à un dispositif selon l'invention ;

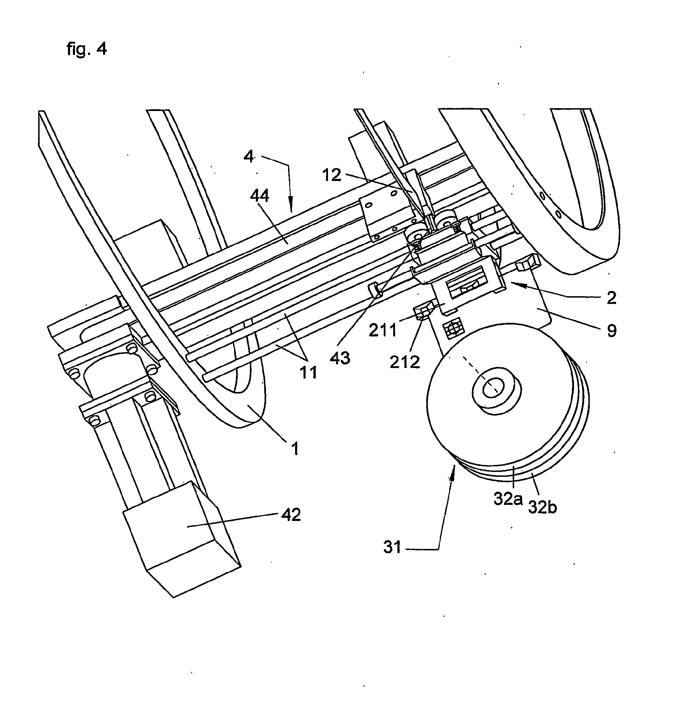

- la figure 4 représente une vue en perspective partielle d'un dispositif selon l'invention, dans une situation où une carte est en cours de traitement dans une station d'embossage (la roue d'embossage étant seule représentée) ;
- la figure 5 représente une vue en perspective d'une station d'embossage de cartes d'un dispositif selon l'invention ;
- la figure 6 représente une vue partielle en perspective d'une station d'embossage reliée au support de statuions par un dispositif de positionnement de station.

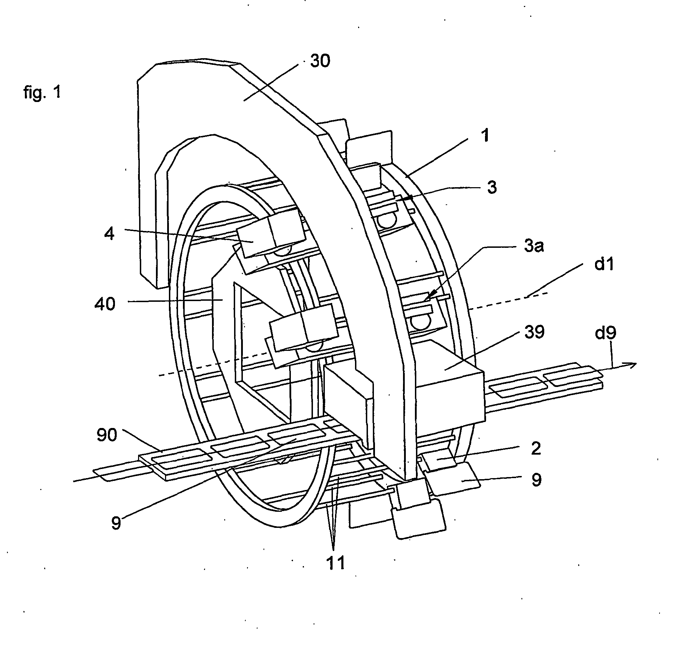

Dans un mode de réalisation représenté en figure 1, le dispositif selon l'invention comprend une structure (1) en forme de barillet cylindrique, en rotation autour d'un axe (d1) de barillet parallèle à la direction (d9) de cheminement sur un convoyeur (90) des cartes (9) à traiter, cet axe (d1) de barillet étant situé sensiblement dans le plan desdites cartes sur le convoyeur. Ce barillet (1) porte un ou plusieurs dispositifs (2) de transport, et positionne chacun de ces dispositifs (2) de transport successivement en vis à vis d'une station (39) d'approvisionnement où il saisi une carte (9) à traiter, puis d'une ou plusieurs stations (3) de traitement sans jamais que la carte (9) ne soit relâchée par ce dispositif de transport, puis ramène ce même dispositif de transport à la station d'approvisionnement où la carte traitée est déposée sur le convoyeur.

Une ou plusieurs stations de traitement ou d'embossage (3) sont disposées en un certain nombre de positions angulaires à intervalles régulier, par exemple un douzième de tour du barillet, et sont supportés par une structure fixe dite support (30) de stations. Lors de chaque déplacement du barillet, une nouvelle carte maintenue dans un dispositif de transport est ainsi amenée devant chaque station de traitement, chaque station effectue alors ses propres opérations sur une carte différente. La combinaison de plusieurs stations de traitement dans le dispositif permet donc d'effectuer plusieurs opérations sur chaque carte lors de son passage dans le barillet, tout en conservant une cadence de production proche de la cadence de la station la moins rapide.

Les dispositifs (2) de transport sont mobiles par rapport au barillet (1) selon une direction parallèle à l'axe (d1) du barillet, et sont guidés pour cela par des moyens de guidage (11) constitués de deux barres cylindriques par dispositif (2) de transport, d'axes parallèles à l'axe (d1) du barillet. Ce dispositif comprend une pince dont le corps présente deux perçages parallèles munis de douilles à billes dans lesquelles coulissent les barres des moyens de guidage (11).

Cette pince (21) comporte un mors supérieur (211) et un mors inférieur (212), ces mors pouvant être équipés de tampons (23), par exemple en caoutchouc, pour éviter de marquer les cartes. Le mors inférieur (212) est solidaire du corps de la pince (21), et le mors supérieur (211) pivote autour d'un axe sensiblement parallèle à la direction de guidage des moyens de guidage (11). Ce mors supérieur est maintenu en pression sur la carte (9) à transporter par la pression de deux ressorts (22) s'appuyant sur le corps de la pince (21). La pince (21) est ainsi normalement fermée et peut être ouverte par l'action mécanique d'un actionneur d'un type connu sur une barre (24) d'ouverture solidaire du mors (211) supérieur, dans un mouvement contrariant la pression des ressorts (22) pour faire pivoter ce mors (211) supérieur dans le sens de l'ouverture.

Dans un mode de réalisation (non représenté), le convoyeur (90) comprends deux rails parallèles en forme de cornières supportant et guidant deux bords opposés des cartes. Les cartes glissent sur ces deux rails en étant entraînées par une courroie à taquets située au centre et en dessous du convoyeur, les taquets poussant le bord arrière de la carte sur sa tranche. Au sein de la station (39) d'approvisionnement, le rail côté barillet (1) est interrompu, et le mors (212) inférieur d'une pince (21) prend sa place. Lorsqu'une carte est en place sur le mors inférieur (212), la tige (24) d'ouverture est relâchée et la pince (21) se referme sous l'effet des ressorts (22) sur la carte (9), la carte (9) étant alors tenue par la pince (21) dans un plan contenant l'axe (d1) du barillet.

Lors de la rotation du barillet (1), la pince (21) tenant la carte (9) est alors déplacée et amenée en une position angulaire en vis à vis de celle d'un dispositif (4) de transfert. Ce dispositif est apte à transférer ladite pince, et donc la carte, entre sa position lors de la rotation du barillet et une station (3) de traitement dite correspondante, par exemple une station d'embossage. Ce dispositif de transfert peut également réaliser des déplacements de la pince et la carte à l'intérieur de la station de traitement.

Un ou plusieurs dispositifs (4) de transfert sont disposés en un certain nombre de positions angulaires à intervalles régulier, par exemple un douzième de tour du barillet, et sont supportés par une structure fixe dite support (40) de transferts. Chacun de ces dispositifs (4) de transfert comporte un moteur (42) actionnant une courroie (44), cette courroie entraînant de façon linéaire un doigt d'indexation (43) selon une direction parallèle à l'axe (d1) du barillet. Ce doigt (43) d'indexation comporte une partie allongée, d'axe perpendiculaire à son déplacement et saillant à l'extérieur de son dispositif (4) de transfert. Lors du positionnement d'un dispositif de transport (2) en vis à vis d'un dispositif (4) de transfert, le doigt (43) d'indexation vient s'insérer entre deux galets (26) portés par le corps de la pince (21).

Dans un mode de réalisation, sur toutes les positions angulaires ne comportant pas de dispositif de transfert le dispositif comporte une couronne (12) située dans un plan perpendiculaire à l'axe (d1) du barillet, de chaque côté de laquelle roulent les galets (26) de la pince (21) lors de la rotation dudit barillet. Cet couronne est fixe par rapport au support (4) de transferts et maintient ainsi le dispositif (2) de transport à une même position longitudinale par rapport à ses moyens de guidage (11) linéaires.

Lorsqu'un dispositif (2) de transport est positionné en vis à vis d'un dispositif (4) de transfert, le moteur (42) de ce dispositif de transfert est commandé par un système de commande (non représenté) pour déplacer ledit dispositif (2) de transport le long des barres de ses moyens (11) de guidage, par l'intermédiaire du doigt d'indexation (43). Ainsi, par le déplacement de l'ensemble du dispositif (2) de transport, la carte peut être déplacée sans être relâchée, durant toute la durée du traitement effectué par la station (3) de traitement correspondante, par exemple une opération d'embossage.

De façon avantageuse, le moteur (42) du dispositif (4) de transfert est d'un type comprenant en interne un codeur et repérage de position ainsi qu'un asservissement de ses mouvements, par exemple de la marque « Brushless » (marque déposée). Un tel système interne de commande permet alors de positionner la carte à un emplacement intermédiaire quelconque sur toute la longueur de sa course, sans être limité à un certain nombre de positions déterminées par un pas minimum de déplacement comme c'est le cas avec un moteur de type « pas à pas ».

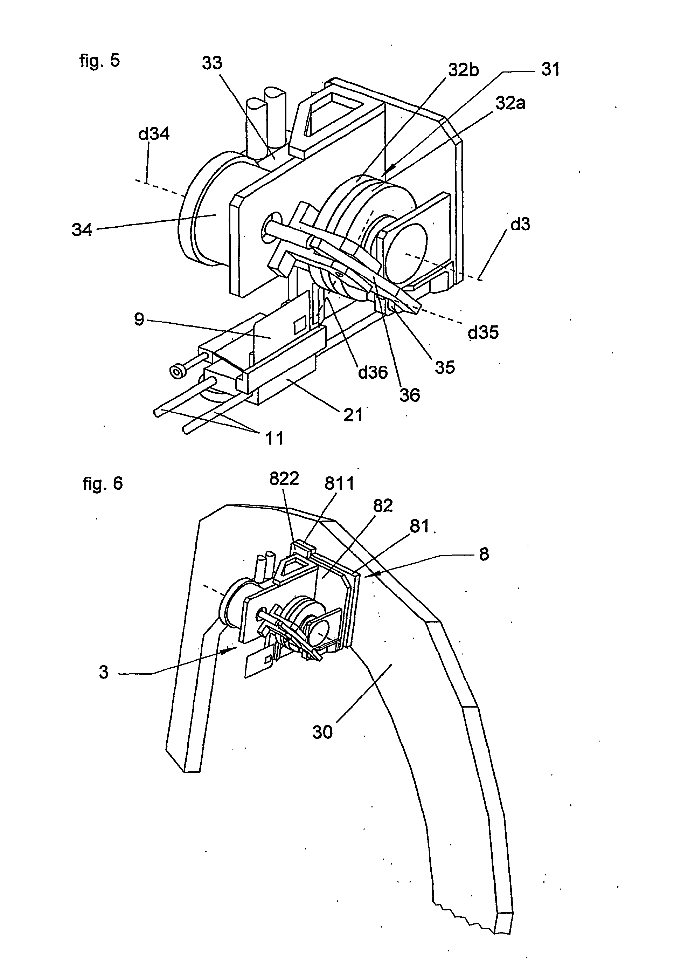

Dans un mode de réalisation, une station (3) de traitement comprend une station d'embossage, destinée à effectuer un marquage en relief par déformation plastique de la carte (9) entre deux matrices complémentaires. Dans un mode de réalisation illustré en figure 5, cet embossage est réalisée par une roue (31) d'embossage comportant sur sa périphérie deux groupes de logements, répartis en deux anneaux ou flasques (32a, 32b) situés de part et d'autre du plan de la carte à embosser. Dans ces logements sont disposés les matrices des caractères ou symboles à embosser. Chacun de ces symboles utilise une matrice mâle et une matrice femelle, disposées chacune dans un des groupes de logement. Ces logements permettent aux matrices de coulisser parallèlement à l'axe (d3) de rotation de la roue d'embossage pour venir en contact avec les deux faces de la carte à embosser.

Pour chaque forme de caractère à embosser, la roue d'embossage est déplacée en rotation par un moteur (33) de façon à présenter les formes complémentaires du caractère à embosser dans une position située sur le chemin de déplacement d'une pièce (35) de frappe. Cette pièce de frappe est actionnée par un électro-aimant (34) par l'intermédiaire d'une pièce de renvoi formant renvoi d'angle entre la direction (d34) de déplacement de l'électro-aimant et la direction (d35) de déplacement de la pièce de frappe (35), par pivotement autour d'un axe (d36) de renvoi. La carte (9) à embosser est amenée entre les flasques (32a, 32b) de la roue (31) d'embossage et déplacée, par la pince (21) qui la porte, de façon à ce que la position où doit être embossé le caractère choisi soit en vis à vis du caractère correspondant sur cette roue d'embossage. Après la frappe de chaque caractère, la carte (9) est à nouveau déplacée par sa pince (21) pour se positionner de façon adéquate pour le prochain caractère à embosser sur la même ligne parallèle aux moyens de guidage (11).

De façon avantageuse, une ou plusieurs des pièces (35, 36) constituant ce mécanisme de renvoi d'angle sont ramenées dans leur position initiale par un ressort de rappel. Cette disposition permet de modifier la répartition de l'inertie des différentes pièces manoeuvrées par l'électro-aimant, et peut en améliorer les performances, la fiabilité, ou la facilité de réglage. De façon avantageuse, le moteur (33) actionnant la roue (31) de la station (3) d'embossage est d'un type comprenant en interne un codeur et repérage de position ainsi qu'un asservissement de ses mouvements, par exemple de la marque « Brushless » (marque déposée). Un tel système de commande permet alors de positionner la roue d'embossage en une position quelconque de sa course en rotation, sans être limité à un certain nombre de positions déterminées par un pas minimum de rotation comme c'est le cas avec un moteur de type « pas à pas ».

Lorsque les cartes à traiter comprennent plusieurs lignes de symboles à embosser, le dispositif selon l'invention peut comprendre plusieurs stations (3, 3a ; figure 1) d'embossage, chacune étant positionnée à une distance de l'axe (d1) du barillet (1) correspondant à la position d'une ligne différente à embosser sur une même carte (9).

Il peut être utile de pouvoir effectuer des réglages ou des essais sur une station de traitement ou d'embossage en immobilisant que peu de temps ou pas du tout l'ensemble du dispositif, en raison des pertes de temps et de production que cela peut comporter.

Dans un mode de réalisation représenté en figure 6, les stations d'embossage (3) ou de traitement sont chacune fixées et positionnées sur le support (30) de stations à l'aide d'un dispositif (8) de positionnement de station. Ce dispositif de positionnement de station comprend une première partie (81) de référence solidaire du support (30) de stations et une deuxième partie (82) de référence solidaire de la station. Ces deux parties (81, 82) de référence peuvent être réunies ou séparées l'une de l'autre, à l'aide de moyens de fixation rapide d'un type connu (non représenté), par exemple des grenouillères, clips, ou dispositifs à came.

De façon à présenter entre eux une position relative constante d'un démontage à l'autre, ces deux parties (81, 82) de référence comportent également des moyens de positionnement coopérant ensemble pour former une ou plusieurs butées définissant pour l'une de ces deux parties de référence une position déterminée dans l'espace par rapport à l'autre partie de référence. Ces moyens de positionnement peuvent comprendre par exemple plusieurs surfaces planes durcies et rectifiées venant en contact selon trois directions non coplanaires pour former butée dans ces trois directions. Les parties de référence peuvent par exemple être deux platines fixées respectivement au support de stations et à la station, ces platines présentant des surfaces en vis à vis formant les moyens positionnement.

Il peut être utile de pouvoir obtenir une position identique de la roue (31) d'embossage ou moyens de traitement par rapport au support (30) de stations et au barillet pour tous les emplacements, dits emplacements de station, du support de stations où une station de traitement ou d'embossage peut être implantée. A cet effet, un tel dispositif (8) de positionnement de station comporte des premiers moyens (811) de réglage permettant un ajustement de la position relative dans l'espace de la première partie (81) de référence par rapport au support de stations. Il est ainsi possible de monter une même station à n'importe lequel emplacement de station en conservant un même positionnement de la roue d'embossage par rapport au support de stations.

Il peut également être utile de pouvoir obtenir une position identique de la roue (31) d'embossage ou moyens de traitement par rapport au support (30) de stations et au barillet pour n'importe quelle station de même type. A cet effet, un tel dispositif (8) de positionnement de station comporte des deuxièmes moyens (822) de réglage permettant un ajustement de la position relative dans l'espace de la station de traitement ou d'embossage par rapport à la deuxième partie (82) de référence.

De tels moyens de réglages peuvent par exemple comprendre des vis millimétriques ou micrométriques, permettant d'obtenir de bonnes précisions et répétabilités, par exemple de l'ordre du dixième ou centième de millimètre.

Le fait de pouvoir régler tous les emplacements de stations de façon identique par rapport au support (30) de stations quant à la première partie (81) de référence de leur dispositif (8) de positionnement de station, et toutes les stations (3) de façon identique par rapport à la deuxième partie (82) de référence qu'elles portent, permet de bénéficier d'une bonne interchangeabilité des stations. Les stations de traitement ou d'embossage sont ainsi interchangeables entre elles et d'un emplacement à l'autre sur le chemin de transport. Une telle interchangeabilité présentent de grands avantages en évitant d'immobiliser la production pour réaliser des opération de maintenance ou des réglages sur les différentes stations de traitement ou d'embossage.

Il est par exemple possible d'effectuer une opération de dépannage ou de maintenance sur une station en positionnant celle-ci sur un support de test séparé de la machine de production, c'est à dire « off-line ». Si l'on dispose d'une station de rechange déjà réglée, il est alors possible de démonter la station à entretenir et de la remplacer rapidement par la station de rechange en conservant un même positionnement de sa roue d'embossage ou moyens de traitement par rapport au bâti. Il est donc possible de remplacer cette station sans réglage sur machine et donc sans interrompre la production de façon prolongée.

De même, il est également possible de réaliser un premier réglage « off-line » d'une ou plusieurs stations dé rechange pour adapter celles-ci aux besoins d'une nouvelle production, puis de monter ces stations déjà réglées sur leurs emplacements de station sans interrompre la production de façon prolongée.

Dans un mode de réalisation (non représenté), les dispositifs (4) de transfert sont chacun fixés et positionnés sur le support (40) de transferts à l'aide d'un dispositif de positionnement de transfert similaire au dispositif (8) de positionnement de station décrit plus haut.

La position et le réglage interne de chaque dispositif de transfert par rapport à sa station (3) d'embossage ou de traitement correspondante peuvent en effet être importants pour obtenir une qualité d'embossage ou de traitement satisfaisante. Ces réglages interne ou de position peuvent par exemple être utilisés pour régler ou modifier la position des zones à embosser, dans une ligne ou entre deux lignes de symboles, ou l'écartement des symboles entre eux.

L'utilisation d'un tel dispositif de positionnement de transfert permet ainsi de réaliser les réglages, dépannages, et modifications de production par rapport au support (40) de transfert également en temps masqué. Les supports (30, 40) de transferts et de stations étant fixes l'un par rapport à l'autre, l'ensemble des combinaisons de réglages est ainsi possible en temps masqué pour chaque couple station/transfert.

Dans un mode de réalisation, une station de traitement comprend une station de personnalisation de la carte (9) à traiter, par exemple par écriture magnétique, par écriture électrique dans une mémoire électronique par contact galvanique ou par transmission sans fil par des moyens connus. Cette personnalisation peut se faire par écriture magnétique sur une piste magnétique par une tête, le déplacement relatif de cette tête par rapport à la carte (9) à personnaliser pouvant être réalisé par déplacement de la pince (21) portant ladite carte.

Dans un mode de réalisation, une station de traitement comprend une station d'impression utilisant une tête d'impression par exemple par un procédé à jet d'encre, le déplacement relatif de cette tête d'impression par rapport à la carte (9) à imprimer pouvant être réalisé par déplacement de la pince (21) portant ladite carte.

Dans un mode de réalisation, une station de traitement comprend une station d'identification ou de contrôle par des moyens connus d'informations contenues dans ou sur une carte traitée ou à traitée, ces informations pouvant être de tout type connu par exemple lecture de caractères, contrôle de conformité d'impression, reconnaissance de couleurs ou signes distinctifs, lecture de données sous forme d'informations optiques, électroniques ou magnétiques, ou une combinaison de ces types de contrôles ou d'informations.

Dans la présente description les stations sont citées par la mention de leur fonctionnalités, mais il doit être évident que plusieurs des stations de traitement de fonctionnalité identiques ou différentes peuvent être réunies en une seule station sans sortir de l'esprit de l'invention.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de traitement de cartes, comprenant une structure (1) mobile de transport portant au moins un dispositif (2) de transport, ce dispositif de transport comprenant des moyens de transport pour recevoir au moins une carte (9) en au moins une station d'approvisionnement (39) et amenant ladite carte à une ou plusieurs stations (3) de traitement ladite structure de transport (1) étant un barillet rigide de forme sensiblement cylindrique qui amène par rotation autour d'un axe (d1) de barillet le dispositif (2) de transport successivement en vis-à-vis d'une station (3, 39) puis d'une autre **caractérisé en ce que** le dispositif (2) de transport est mobile par rapport à la structure (1) de transport et le dispositif de traitement de cartes comporte au moins un dispositif (4) de transfert pour entraîner au moins un dispositif de transport permettant un déplacement dudit dispositif de transport vers la station de traitement (3) ou un déplacement à l'intérieur de cette station, ou une combinaison des deux, sans quitter ladite structure de transport.

2. Dispositif selon la revendication 1, **caractérisé en ce que** ledit dispositif (4) de transfert est fixe par rapport à au moins une station (3) de traitement dite correspondante, ce dispositif de transfert comportant des moyens de déplacement assurant la mise en place et le déplacement, pour un traitement dans cette même station de traitement, d'au moins un dispositif (2) de transport portant une carte (9), de façon à ce que cette même carte soit traitée sans être relâchée par le dispositif de transport.

3. Dispositif selon l'une des revendications 1 ou 2, **caractérisé en ce qu'**au moins un dispositif (4) de transfert est porté en un emplacement de transfert par un support (40) de transferts fixe par rapport à la station (3) de traitement correspondante, la position de ce dispositif de transfert par rapport à cette station de traitement correspondante étant déterminée par un dispositif de positionnement de transfert comportant au moins une première partie de référence, solidaire du support de transferts, séparable de façon réversible d'au moins une deuxième partie de référence, solidaire du dispositif de transfert, ces deux parties de référence comportant des moyens de positionnement coopérant ensemble pour former une butée assurant une position identique de ce dispositif (4) de transfert par rapport à la station (3) de traitement correspondante après une séparation puis un remontage de ces deux parties de référence, ou après un remplacement de ce dispositif de transfert par un autre.

4. Dispositif selon la revendication 3, **caractérisé en ce qu'**au moins un dispositif de positionnement de transfert comporte des premiers moyens de réglage permettant une modification ou un ajustement de la position de la première partie de référence de ce même dispositif de positionnement de transfert par rapport à la station (3) de traitement correspondante.

5. Dispositif selon l'une des revendications 3 ou 4, **caractérisé en ce qu'**au moins un dispositif de positionnement de transfert comporte des deuxièmes moyens de réglage permettant un ajustement de la position de son dispositif (4) de transfert par rapport à la deuxième partie de référence de ce même dispositif de positionnement de transfert.

6. Dispositif selon l'une quelconques des revendications 1 à 5, **caractérisé en ce qu'**au moins une station (3) de traitement est portée par une structure dite support (30) de stations, la position de cette station de traitement par rapport au support de stations étant déterminée par un dispositif (8) de positionnement de station comportant au moins une première partie (81) de référence, solidaire du support (30) de stations, séparable de façon réversible d'au moins une deuxième partie (82) de référence, solidaire de cette station de traitement dite correspondante, ces deux parties (81, 82) comportant des moyens de positionnement coopérant ensemble pour former une butée assurant une position identique de cette station (3) de traitement par rapport au support (30) de stations après une séparation puis un remontage de ces deux parties de référence, ou après un remplacement de cette station de traitement par une autre.

7. Dispositif selon la revendication 6, **caractérisé en ce qu'**au moins un dispositif (8) de positionnement de station comporte des premiers moyens (811) de réglage permettant une modification ou un ajustement de la position de la première partie (81) de référence de ce même dispositif de positionnement de, station par rapport à son support (30) de stations.

8. Dispositif selon l'une des revendications 6 ou 7, **caractérisé en ce qu'**au moins un dispositif (8) de positionnement de station comporte des deuxièmes moyens (822) de réglage permettant un ajustement de la position de la station (3) de traitement correspondante par rapport à la deuxième partie (82) de référence de ce même dispositif de positionnement de station.

9. Dispositif selon l'une quelconque des revendications 1 à 8, **caractérisé en ce que** les moyens de transport d'au moins un dispositif (2) de transport comprennent au moins une pince (21) comprenant un mors (211) supérieur et un mors (212) inférieur maintenus normalement fermés sur la carte (9) par au moins un ressort (22).

10. Dispositif selon la revendication 9, **caractérisé en ce que** la pince (21) maintient la carte par l'intermédiaire d'éléments, dits tampons (23), d'une matière élastique se déformant sous la force de fermeture et limitant ainsi la pression de contact appliquée sur au moins une des surfaces de la carte (9) pour éviter de marquer celle-ci.

11. Dispositif selon l'une des revendications 9 ou 10, **caractérisé en ce que** la pince présente des moyens de manoeuvre comprenant au moins une tige d'ouverture (24) effectuant l'ouverture des mors (211, 212) de la pince sous l'action d'un actionneur extérieur à la pince.

12. Dispositif selon l'une quelconque des revendications 1 à 11, **caractérisé en ce qu'**au moins un dispositif (2) de transport est entraîné par au moins un dispositif (4) de transfert suivant un déplacement linéaire parallèle à l'axe (d1) du barillet, et est guidé par des moyens de guidage (11) solidaires du barillet.

13. Dispositif selon l'une quelconque des revendications 1 à 12, **caractérisé en ce qu'**au moins un dispositif (4) de transfert comporte des moyens de motorisation permettant un déplacement continu, c'est-à-dire pouvant s'arrêter en n'importe quelle position intermédiaire sans être limité par un pas minimum de déplacement.

14. Dispositif selon l'une quelconque des revendications 1 à 13, **caractérisé en ce qu'**au moins un dispositif (4) de transfert agit sur au moins un dispositif (2) de transport par un doigt (43) d'indexation entraîné par une courroie (44) elle-même entraînée par un moteur (42) d'un type incorporant un repérage de position et un asservissement du déplacement à ce repérage.

15. Dispositif selon l'une des revendications 1 à 14, **caractérisé en ce que** la station d'approvisionnement (39) reçoit les cartes par un convoyeur (90) suivant une direction (d9) parallèle à l'axe (d 1) de rotation du barillet, la structure (1) de transport ramenant chaque dispositif (2) de transport en vis-à-vis d'au moins une station (39) d'approvisionnement après être passé par au moins une station (3) de traitement, de façon à ce que la carte (9) traitée soit déposée sur le même convoyeur (90) qui l'a précédemment amenée à ladite station (39) d'approvisionnement.

16. Dispositif selon l'une des revendications 1 à 15, **caractérisé en ce qu'**au moins une station (3) de traitement comprend une station d'embossage de cartes par déformation plastique ou marquage en relief.

17. Dispositif selon l'une des revendications 1 à 16, **caractérisé en ce qu'**il comprend plusieurs stations d'embossage ou de marquage en relief, chaque station effectuant l'embossage d'une zone différente sur la même carte (9).

18. Dispositif selon l'une des revendications 16 ou 17, **caractérisé en ce qu'**au moins une station d'embossage comprend au moins une roue (31) d'embossage portant deux jeux de matrices mâle et femelle disposés en anneaux (32a, 32b) autour de l'axe (d3) de cette roue et réalisant l'embossage en se rapprochant selon une direction parallèle à cet axe (d3), le passage d'un caractère à embosser à un autre sur la carte (9) à embosser se faisant par déplacement du dispositif (2) de transport portant cette même carte.

19. Dispositif selon l'une quelconque des revendications 16 à 18, **caractérisé en ce qu'**au moins une station d'embossage comporte au moins une roue (31) d'embossage entraînée en prise directe par un moteur (33) d'un type incorporant un repérage de position et un asservissement du déplacement à ce repérage.

20. Dispositif selon l'une quelconque des revendications 16 à 19, **caractérisé en ce qu'**au moins une station d'embossage comporte au moins une roue (31) d'embossage dont les caractères sont frappés par un électro-aimant (34) ou un solénoïde par l'intermédiaire d'au moins un mécanisme (36) de renvoi d'angle.

21. Dispositif selon la revendication 20, **caractérisé en ce qu'**au moins un renvoi d'angle comporte au moins une de ses pièces mobiles qui, après la frappe d'un caractère, est ramenée dans sa position initiale par au moins un ressort de rappel.

22. Dispositif selon l'une quelconque des revendications 1 à 21, **caractérisé en ce qu'**au moins une station (3) de traitement comprend une station de contrôle vérifiant la conformité des traitements subis ou à subir par une carte, par rapport à des informations prédéterminées ou personnalisées.

23. Dispositif selon l'une quelconque des revendications 1 à 22, **caractérisé en ce qu'**au moins une station (3) de traitement comprend une station de personnalisation des informations de type électronique, magnétique, optique, ou d'une combinaison de ces types, contenues dans une carte.

24. Dispositif selon l'une quelconque des revendications 1 à 23, **caractérisé en ce qu'**au moins une station (3) de traitement comprend une station d'impression de cartes.

## Claims

1. Card processing device, comprising a movable transport structure (1) carrying at least one transport device (2), the said transport device comprising transport means to receive at least one card (9) in at least one supply station (39) and conveying said card to one or more processing stations (3), said transport structure (1) being a rigid barrel of essentially cylindrical shape that conveys by rotation about a barrel axis (d1) the transport device (2) to successively face one station (3, 39) after another, **characterised in that** the transport device (2) is movable in relation to the transport structure (1) and **in that** the card processing device includes at least one transfer device (4) to drive at least one transport device, allowing movement of the said transport device towards the processing station (3) or movement inside this station, or a combination of the two, without leaving said transport structure.

2. Device according to claim 1, **characterised in that** said transfer device (4) is fixed in relation to at least one so-called corresponding processing station (3), this transfer device comprising moving means ensuring the placing and moving, for processing in said processing station, of at least one transport device (2) carrying a card (9), so that said card is processed without being released by the transport device.

3. Device according to any one of the claims 1 or 2, **characterised in that** at least one transfer device (4) is carried in a transfer position by a transfer support (40) fixed in relation to the corresponding processing station (3), the position of this transfer device in relation to this corresponding processing station being determined by a transfer positioning device comprising at least one first reference part, integral with the transfer support, reversibly separable from at least one second reference part, integral with the transfer device, these two reference parts comprising positioning means cooperating with one another to form a stop ensuring an identical position of this transfer device (4) in relation to the corresponding processing station (3) after separation and then remounting of these two reference parts, or after replacement of this transfer device by another.

4. Device according to claim 3, **characterised in that** at least one transfer positioning device comprises first adjustment means allowing modification or adjustment of the position of the first reference part of said transfer positioning device in relation to the corresponding processing station (3).

5. Device according to any one of the claims 3 or 4, **characterised in that** at least one transfer positioning device comprises second adjustment means allowing adjustment of the position of its transfer device (4) in relation to the second reference part of said transfer positioning device.

6. Device according to any one of the claims 1 to 5, **characterised in that** at least one processing station (3) is carried by a so-called station support structure (30), the position of this processing station in relation to the station support being determined by a station positioning device (8) comprising at least a first reference part (81), integral with the station support (30), reversibly separable from at least one second reference part (82), integral with this so-called corresponding processing station, these two parts (81, 82) comprising positioning means co-operating with one another to form a stop ensuring an identical position for this processing station (3) in relation to the station support (30) after separation and remounting of these two reference parts, or after replacement of this processing station by another.

7. Device according to claim 6, **characterised in that** at least one station positioning device (8) comprises first adjustment means (811) allowing modification or adjustment of the position of the first reference part (81) of said station positioning device in relation to its station support (30).

8. Device according to any one of the claims 6 or 7, **characterised in that** at least one station positioning device (8) comprises second adjustment means (822) allowing adjustment of the position of the corresponding processing station (3) in relation to the second reference part (82) of said station positioning device.

9. Device according to any one of the claims 1 to 8, **characterised in that** the transport means of at least one transport device (2) comprise at least one clamp (21) comprising an upper jaw (211) and a lower jaw (212) maintained normally closed on the card (9) by at least one spring (22).

10. Device according to claim 9, **characterised in that** the clamp (21) maintains the card by means of members, called pads (23), of an elastic material that is bent under the force of closing and thus limits the contact pressure applied to at least one of the surfaces of the card (9) to avoid marking it.

11. Device according to any one of the claims 9 or 10, **characterised in that** the clamp presents operating means comprising at least one opening rod (24) operating the opening of the jaws (211, 212) of the clamp under the action of an actuator external to the clamp.

12. Device according to any one of the claims 1 to 11, **characterised in that** at least one transport device (2) is driven by at least one transfer device (4) according to a linear movement parallel to the barrel axis (d1), and is guided by guiding means (11) integral with the barrel.

13. Device according to any one of the claims 1 to 12, **characterised in that** at least one transfer device (4) comprises motorisation means allowing continuous moving, i.e. being able to stop in any intermediate position without being limited by a minimum movement step.

14. Device according to any one of the claims 1 to 13, **characterised in that** at least one transfer device (4) acts on at least one transport device (2) by an indexing finger (43) driven by a belt (44) itself driven by a motor (42) of a type incorporating a position marker and a servo system for moving to this marker.

15. Device according to any one of the claims 1 to 14, **characterised in that** the supply station (39) receives the cards by means of a conveyer (90) along a direction (d9) parallel to the barrel rotation axis (d1), the transport structure (1) carrying each transport device (2) to at least one supply station (39) after passing through at least one processing station (3), so that the card (9) processed is deposited on the same conveyer (90) that previously carried it to said supply station (39).

16. Device according to any one of the claims 1 to 15, **characterised in that** at least one processing station (3) comprises one station for embossing cards by plastic deformation or marking in relief.

17. Device according to any one of the claims 1 to 16, **characterised in that** it comprises several stations for embossing or marking in relief, each station performing the embossing of a different area on the same card (9).

18. Device according to any one of the claims 16 or 17, **characterised in that** at least one station for embossing comprises at least one embossing wheel (31) carrying two sets of male and female matrices arranged in rings (32a, 32b) around the axis (d3) of this wheel and performing the embossing by approaching one another along a direction parallel to this axis (d3), the passage from one character to be embossed to another on the card (9) to be embossed being done by moving of the transport device (2) carrying said card.

19. Device according to any one of the claims 16 to 18, **characterised in that** at least one station for embossing comprises at least one embossing wheel (31) driven directly by a motor (33) of a type incorporating a position marker and a servo system for moving to this marker.

20. Device according to any one of the claims 16 to 19, **characterised in that** at least one station for embossing comprises at least one embossing wheel (31) whose characters are stamped by an electromagnet (34) or a solenoid by means of at least one angular gear mechanism (36).

21. Device according to claim 20, **characterised in that** at least one angular gear comprises at least one of its parts movable which, after a character is stamped, is returned to its original position by at least one return spring.

22. Device according to any one of claims 1 to 21, **characterised in that** at least one processing station (3) comprises a test station checking the conformity of the processing undergone or to be undergone by a card, compared with the predetermined or personalised information.

23. Device according to any one of the claims 1 to 22, **characterised in that** at least one processing station (3) comprises a station for personalisation of information of an electronic, magnetic, optical type, or a combination of these types, contained in a card.

24. Device according to any one of the claims 1 to 23, **characterised in that** at least one processing station (3) comprises a station for printing cards.

## Patentansprüche

1. Vorrichtung zur Kartenverarbeitung, die eine bewegliche Transportanordnung (1) enthält, welche mindestens eine Transportvorrichtung (2) trägt, wobei diese Transportvorrichtung Transporteinrichtungen enthält, um mindestens eine Karte (9) an mindestens einer Versorgungsstation (39) zu empfangen, und die Karte zu einer oder mehreren Verarbeitungsstationen (3) führt, wobei die Transportanordnung (1) eine starre Trommel von im Wesentlichen zylindrischer Form ist, die durch Drehung um eine Trommelachse (d1) die Transportvorrichtung (2) nacheinander vor eine Station (3, 39) und dann eine andere bringt, **dadurch gekennzeichnet, dass** die Transportvorrichtung (2) bezüglich der Transportanordnung (1) beweglich ist, und die Kartenverarbeitungsvorrichtung mindestens eine Transfervorrichtung (4) aufweist, um mindestens eine Transportvorrichtung anzutreiben, was eine Verschiebung der Transportvorrichtung zur Verarbeitungsstation (3) oder eine Verschiebung im Inneren dieser Station oder eine Kombination von beiden erlaubt, ohne die Transportanordnung zu verlassen.

2. Vorrichtung nach Anspruch 1, **dadurch gekennzeichnet, dass** die Transfervorrichtung (4) bezüglich mindestens einer besagten zugehörigen Verarbeitungsstation (3) fest ist, wobei diese Transfervorrichtung Verschiebeeinrichtungen aufweist, die für eine Verarbeitung in derselben Verarbeitungsstation das Einsetzen und das Verschieben mindestens einer eine Karte (9) tragenden Transportvorrichtung (2) gewährleisten, damit diese Karte verarbeitet wird, ohne von der Transportvorrichtung losgelassen zu werden.

3. Vorrichtung nach einem der Ansprüche 1 oder 2, **dadurch gekennzeichnet, dass** mindestens eine Transfervorrichtung (4) an einer Transferstelle von einem bezüglich der zugehörigen Verarbeitungsstation (3) festen Transferträger (40) getragen wird, wobei die Position dieser Transfervorrichtung bezüglich dieser zugehörigen Verarbeitungsstation von einer Transferpositioniervorrichtung bestimmt wird, die mindestens einen mit dem Transferträger fest verbundenen ersten Bezugsteil aufweist, der von mindestens einem mit der Transfervorrichtung fest verbundenen zweiten Bezugsteil reversibel trennbar ist, wobei diese zwei Bezugsteile Positioniereinrichtungen aufweisen, die zusammenwirken, um einen Anschlag zu bilden, der eine identische Position dieser Transfervorrichtung (4) bezüglich der zugehörigen Verarbeitungsstation (3) nach einer Trennung und dann einem Wiederzusammenbau dieser zwei Bezugsteile, oder nach einem Austausch dieser Transfervorrichtung durch eine andere, gewährleistet.

4. Vorrichtung nach Anspruch 3, **dadurch gekennzeichnet, dass** mindestens eine Transferpositioniervorrichtung erste Einstelleinrichtungen aufweist, die eine Änderung oder eine Anpassung der Position des ersten Bezugsteils dieser Transferpositioniervorrichtung bezüglich der zugehörigen Verarbeitungsstation (3) erlauben.

5. Vorrichtung nach einem der Ansprüche 3 oder 4, **dadurch gekennzeichnet, dass** mindestens eine Transferpositioniervorrichtung zweite Einstelleinrichtungen aufweist, die eine Anpassung der Position ihrer Transfervorrichtung (4) bezüglich des zweiten Bezugsteils dieser Transferpositioniervorrichtung erlauben.

6. Vorrichtung nach einem der Ansprüche 1 bis 5, **dadurch gekennzeichnet, dass** mindestens eine Verarbeitungsstation (3) von einer so genannten Anordnung Stationsträger (30) getragen wird, wobei die Position dieser Verarbeitungsstation bezüglich des Stationsträgers von einer Stationspositioniervorrichtung (8) bestimmt wird, die mindestens einen mit dem Stationsträger (30) fest verbundenen ersten Bezugsteil (81) aufweist, der von mindestens einem mit dieser besagten zugehörigen Verarbeitungsstation fest verbundenen zweiten Bezugsteil (82) reversibel trennbar ist, wobei diese zwei Teile (81, 82) Positioniereinrichtungen aufweisen, die zusammenwirken, um einen Anschlag zu bilden, der eine identische Position dieser Verarbeitungsstation (3) bezüglich des Stationsträgers (30) nach einer Trennung und dann einem Wiederzusammenbau dieser zwei Bezugsteile, oder nach einem Austausch dieser Verarbeitungsstation durch eine andere, gewährleistet.

7. Vorrichtung nach Anspruch 6, **dadurch gekennzeichnet, dass** mindestens eine Stationspositioniervorrichtung (8) erste Einstelleinrichtungen (811) aufweist, die eine Änderung oder eine Anpassung der Position des ersten Bezugsteils (81) dieser Stationspositioniervorrichtung bezüglich ihres Stationsträgers (30) erlauben.

8. Vorrichtung nach einem der Ansprüche 6 oder 7, **dadurch gekennzeichnet, dass** mindestens eine Stationspositioniervorrichtung (8) zweite Einstelleinrichtungen (822) aufweist, die eine Anpassung der Position der entsprechenden Verarbeitungsstation (3) bezüglich des zweiten Bezugsteils (82) dieser Stationspositioniervorrichtung erlauben.

9. Vorrichtung nach einem der Ansprüche 1 bis 8, **dadurch gekennzeichnet, dass** die Transporteinrichtungen mindestens einer Transportvorrichtung (2) mindestens eine Klammer (21) enthalten, die eine obere Backe (211) und eine untere Backe (212) enthält, welche normalerweise durch mindestens eine Feder (22) auf der Karte (9) geschlossen gehalten werden.

10. Vorrichtung nach Anspruch 9, **dadurch gekennzeichnet, dass** die Klammer (21) die Karte mittels Puffer (23) genannter Elemente aus einem elastischen Material hält, die sich unter der Schließkraft verformen und so den Kontaktdruck begrenzen, der auf mindestens eine der Flächen der Karte (9) ausgeübt wird, um ein Markieren dieser Karte zu vermeiden.

11. Vorrichtung nach einem der Ansprüche 9 oder 10, **dadurch gekennzeichnet, dass** die Klammer Betätigungseinrichtungen aufweist, die mindestens eine Öffnungsstange (24) enthalten, die das Öffnen der Backen (211, 212) der Klammer unter der Einwirkung eines Betätigungsglieds außerhalb der Klammer durchführt.

12. Vorrichtung nach einem der Ansprüche 1 bis 11, **dadurch gekennzeichnet, dass** mindestens eine Transportvorrichtung (2) von mindestens einer Transfervorrichtung (4) einer linearen Verschiebung parallel zur Achse (d1) der Trommel folgend angetrieben und von fest mit der Trommel verbundenen Führungseinrichtungen (11) geführt wird.

13. Vorrichtung nach einem der Ansprüche 1 bis 12, **dadurch gekennzeichnet, dass** mindestens eine Transfervorrichtung (4) Antriebseinrichtungen aufweist, die eine durchgehende Verschiebung erlauben, d.h., die an einer beliebigen Zwischenposition enden kann, ohne durch einen Mindestverschiebeschritt begrenzt zu sein.

14. Vorrichtung nach einem der Ansprüche 1 bis 13, **dadurch gekennzeichnet, dass** mindestens eine Transfervorrichtung (4) auf mindestens eine Transportvorrichtung (2) über einen Indexierfinger (43) einwirkt, der von einem Keilriemen (44) angetrieben wird, welcher selbst von einem Motor (42) eines Typs angetrieben wird, der eine Positionsmarkierung und eine Regelung der Verschiebung auf diese Markierung umfasst.

15. Vorrichtung nach einem der Ansprüche 1 bis 14, **dadurch gekennzeichnet, dass** die Versorgungsstation (39) die Karten von einem Förderband (90) einer Richtung (d9) parallel zur Drehachse (d1) der Trommel folgend empfängt, wobei die Transportanordnung (1) jede Transportvorrichtung (2) vor mindestens eine Versorgungsstation (39) zurückbringt, nachdem sie durch mindestens eine Verarbeitungsstation (3) gegangen ist, damit die verarbeitete Karte (9) auf dem gleichen Förderband (90) deponiert wird, das sie vorher zur Versorgungsstation (39) gebracht hat.

16. Vorrichtung nach einem der Ansprüche 1 bis 15, **dadurch gekennzeichnet, dass** mindestens eine Verarbeitungsstation (3) eine Station zum Prägen von Karten durch plastische Verformung oder Reliefmarkierung aufweist.

17. Vorrichtung nach einem der Ansprüche 1 bis 16, **dadurch gekennzeichnet, dass** sie mehrere Präge- oder Reliefmarkierungsstationen aufweist, wobei jede Station das Prägen in einer anderen Zone der gleichen Karte (9) durchführt.

18. Vorrichtung nach einem der Ansprüche 16 oder 17, **dadurch gekennzeichnet, dass** mindestens eine Prägestation mindestens ein Prägerad (31) enthält, das zwei Sätze von Einsteck- und Aufnahmematrizen trägt, die als Ringe (32a, 32b) um die Achse (d3) dieses Rads angeordnet sind und das Prägen durchführen, indem sie sich entlang einer Richtung parallel zu dieser Achse (d3) annähern, wobei der Übergang von einem zu prägenden Buchstaben zu einem anderen auf der zu prägenden Karte (9) durch Verschieben der diese Karte tragenden Transportvorrichtung (2) erfolgt.

19. Vorrichtung nach einem der Ansprüche 16 bis 18, **dadurch gekennzeichnet, dass** mindestens eine Prägestation mindestens ein Prägerad (31) aufweist, das in direktem Eingriff von einem Motor (33) eines Typs angetrieben wird, der eine Positionsmarkierung und eine Regelung der Verschiebung auf diese Markierung umfasst.

20. Vorrichtung nach einem der Ansprüche 16 bis 19, **dadurch gekennzeichnet, dass** mindestens eine Prägestation mindestens ein Prägerad (31) aufweist, dessen Buchstaben durch einen Elektromagnet (34) oder ein Solenoid mittels mindestens eines Winkelgetriebemechanismus (36) angeschlagen werden.

21. Vorrichtung nach Anspruch 20, **dadurch gekennzeichnet, dass** mindestens ein Winkelgetriebe mindestens eines seiner beweglichen Bauteile aufweist, das nach dem Prägen eines Buchstabens durch mindestens eine Rückstellfeder in seine Anfangsposition zurückgeholt wird.

22. Vorrichtung nach einem der Ansprüche 1 bis 21, **dadurch gekennzeichnet, dass** mindestens eine Verarbeitungsstation (3) eine Kontrollstation enthält, die die Übereinstimmung der von einer Karte erfahrenen oder zu erfahrenden Verarbeitungen bezüglich vorbestimmter oder benutzerspezifischer Informationen überprüft.

23. Vorrichtung nach einem der Ansprüche 1 bis 22, **dadurch gekennzeichnet, dass** mindestens eine Verarbeitungsstation (3) eine Station zur Benutzeranpassung der Informationen vom elektronischen, magnetischen, optischen Typ oder einer Kombination dieser Typen, die in einer Karte enthalten sind, enthält.

24. Vorrichtung nach einem der Ansprüche 1 bis 23, **dadurch gekennzeichnet, dass** mindestens eine Verarbeitungsstation (3) eine Kartendruckstation enthält.
